# EUROPÄISCHE PATENTSCHRIFT

(11) **EP 2 736 856 B1**
(45) Veröffentlichungstag und Bekanntmachung des Hinweises auf die Patenterteilung: **09.12.2015**
(21) Anmeldenummer: 12747909.5
(22) Anmeldetag: 26.07.2012
(51) Int. Cl.: C03B 37/014

(54) **PLASMA-ABSCHEIDEPROZESS ZUR HERSTELLUNG EINER OPTISCHEN VORFORM MIT EINER MANTELGLASSCHICHT AUS FLUORDOTIERTEM QUARZGLAS**
PLASMA DEPOSITION PROCESS FOR PRODUCING AN OPTICAL PREFORM WITH A CLADDING GLASS LAYER COMPOSED OF FLUORINE-DOPED QUARTZ GLASS
PROCÉDÉ DE DÉPÔT PAR PLASMA POUR LA PRODUCTION D'UNE ÉBAUCHE OPTIQUE COMPORTANT UNE COUCHE DE VERRE EXTÉRIEURE EN VERRE DE QUARTZ DOPÉ AU FLUOR

(30) Priorität: 27.07.2011 DE 102011108612
(43) Veröffentlichungstag der Anmeldung: 04.06.2014
(73) Patentinhaber: Heraeus Quarzglas GmbH & Co. KG, 63450 Hanau (DE)
(72) Erfinder: SCHULTHEIS, Andreas, 63505 Langenselbold (DE); BRÄUER, Karsten, 63486 Bruchköbel (DE); SCHMIDT, Richard, 63546 Hammersbach (DE)
(74) Vertreter: Staudt, Armin Walter
(86) Internationale Anmeldenummer: PCT/EP2012/064748
(87) Internationale Veröffentlichungsnummer: WO 2013/014258

(56) Entgegenhaltungen:
- EP-A1- 2 206 689
- EP-A2- 1 997 783
- DE-A1-102005 015 706
- JP-A- 2005 200 265
- US-A1- 2008 053 155

## Beschreibung

Die Erfindung betrifft einen Plasma-Abscheideprozess zur Herstellung einer optischen Vorform mit einer Mantelglasschicht aus fluordotiertem Quarzglas, indem mittels eines Plasmabrenners SiO₂-Partikel in Gegenwart von Fluor gebildet und auf der Zylindermantelfläche eines um seine Längsachse rotierenden, zylinderförmigen Substratkörpers aus Quarzglas schichtweise abgeschieden und zu der Mantelglasschicht verglast werden, wobei Plasmabrenner und Substratkörper relativ zueinander bewegt werden, derart, dass sich der Plasmabrenner reversierend zwischen zwei Wendepunkten entlang des Substratkörpers bewegt.

Die beiderseitigen Wendepunkte dieser Relativbewegung von Substratkörper und Plasmabrenner definieren im Wesentlichen die stirnseitigen Enden der Mantel-glasschicht.

### Stand der Technik

Zur Herstellung einer Vorform für optische Fasern mittels des so genannten "POD-Verfahrens" (Plasma Outside Deposition) wird beispielsweise auf dem Zylinderaußenmantel eines Kernstabs aus Quarzglas eine Mantelglasschicht aus mit Fluor dotiertem Quarzglas erzeugt. Hierfür wird ein Plasmabrenner eingesetzt, dem eine Siliziumverbindung, Sauerstoff und eine Fluorverbindung zugeführt werden und der entlang des um seine Längsachse rotierenden Kernstabs reversierend bewegt wird. Durch Reaktion der Ausgangssubstanzen in der Plasmaflamme bildet sich mit Fluor dotiertes SiO₂, das auf dem Kernglas schichtweise abgeschieden und dabei unter Bildung der fluorhaltigen SiO₂-Mantelglasschicht. direkt verglast wird.

Der Kernstab weist in der Regel ein radial homogenes Brechzahlprofil auf. Er besteht meist aus undotiertem Quarzglas, kann aber auch den Brechungsindex verändernde Dotierstoffe enthalten. Die Fluordotierung der Mantelglasschicht bewirkt eine Absenkung des Brechungsindex' gegenüber undotiertem Quarzglas und damit eine Brechzahldifferenz Δn zwischen dem Kernglas und dem Mantelglas. Eine hohe Brechzahlabsenkung erfordert eine hohe Fluor-Dotierung. Dies wird erreicht, indem die Mantelglasschicht direkt beim Abscheiden verglast und auf diese Weise das leicht diffundierende Fluor im Quarzglas eingeschlossen wird.

Ein derartiges POD-Verfahren zur Herstellung einer Vorform ist beispielsweise in der DE 2005 015 706 A1 und der EP 1 997 783 A2 beschrieben. Der Abscheideprozess wird innerhalb einer vertikal orientierten Kammer mit beweglichem Kernstab ausgeführt, der entlang seiner gesamten zu beschichtenden Länge entlang des ortsfesten Plasmabrenners auf- und abbewegt wird. Auf dem Kernstab wird schichtweise fluordotiertes SiO₂ abgeschieden und Mittels der Plasmaflamme direkt zu der Mantelglasschicht verglast.

Es wird berichtet, dass die Fluor-Dotierung von der Temperatur des Kernstabs (der Ablagerungsfläche) abhängt und mit zunehmender Kernstab-Temperatur abnimmt. Die Absenkung der Kernstab-Temperatur ist jedoch durch das Erfordernis der direkten Verglasung der abgeschiedenen Mantelglasschicht begrenzt.

Außerdem kommt es infolge der reversierenden Relativbewegung des Plasmabrenners im Bereich der Kernstab-Enden zu einem zweifachen unmittelbar aufeinanderfolgenden Überstreichen des Kernstabs mit der Plasmaflamme und damit zu einer Temperaturerhöhung im Vergleich zur Kernstabmitte. Um die damit einhergehende Fluktuation der Fluor-Dotierung in axialer Richtung zu minimieren und um die Brechzahldifferenz Δn insgesamt zu erhöhen, wird vorgeschlagen, bei der Rückwärtsbewegung des Plasmabrenners von einem Kernstab-Ende entweder die Zufuhrrate an Ausgangsmaterial zu verringern oder die Vorschubgeschwindigkeit des Plasmabrenners zu erhöhen.

Ein anderes Verfahren zum Erreichen einer axial homogenen Fluor-Dotierung in einem POD-Verfahren ist aus der JP 2005-200265 A bekannt. Es wird vorgeschlagen, die Temperatur im Auftreffpunkt der Plasmaflamme kontinuierlich zu messen und auf einem vorgegebenen Wert zu halten. Als Stellgröße der Temperaturregelung dient hier der Abstand der Plasmaflamme vom Kernstab.

### Technische Aufgabenstellung

Bei der Relativbewegung des Plasmabrenners beim POD-Abscheideprozess überstreicht die Plasmaflamme den Kernstab reversierend von einem Wendepunkt zum anderen und beheizt dabei den Kernstab lokal. Die nicht beheizten Längenabschnitte kühlen relativ dazu ab. Im Mittelabschnitt sind die beiden Heizphasen bei der Hin- und Rückbewegung durch jeweils gleich lange Abkühlphasen unterbrochen. In den Endbereichen folgen hingegen zwei Heizphasen rasch hintereinander (bei der Hin- und Rückbewegung), getrennt von einer langen Abkühlphase bis zum nächsten Aufheizen. Die Endbereiche erfahren daher einerseits ein relativ stärkeres Abkühlen während der längeren Abkühlphase und andererseits ein relatives Überhitzen durch die kurze zeitliche Abfolge der beiden Heizphasen.

Über die Dauer des Abscheideprozesses betrachtet, ist die Temperaturhistorie in den Endbereichen des Kernstabs daher gänzlich anders als im Mittelbereich.

Betrachtet man hingegen nur einen Bewegungszyklus, so stellt sich über der Gesamtlänge des Kernstabs ein Temperaturgradient ein, der bestimmt wird durch die maximale Temperatur infolge des doppelten Aufheizens an einem Wendepunkt und die zum gleichen Zeitpunkt am anderen Wendepunkt der reversierenden Relativbewegung herrschende minimale Temperatur. Um eine axial homogene Fluor-Dotierung zu erreichen, zielen die bekannten POD-Verfahren darauf ab, den axialen Temperaturverlauf zu vergleichmäßigen, indem die Einwirkung der Plasmaflamme im Bereich der Wendepunkte vermindert wird, unter der gleichzeitigen Prämisse, die Kernstab-Temperatur möglichst niedrig zu halten, um den Fluoreinbau zu fördern.

Eine zu niedrige Temperatur des Kernstabs beim Abscheideprozess kann jedoch zum Reißen der Vorform beitragen und damit einen Totalausfall verursachen. Denn sie birgt nicht nur die Gefahr der unzureichenden Verglasung der Mantelglasschicht, sondern in Verbindung mit dem axialen Temperaturgradienten.auch die Gefahr einer unzureichenden Relaxierung der herstellungsbedingt eingebrachten mechanischen Spannungen. Wegen zunehmender Unterschiede der thermischen Ausdehnungskoeffizienten von Kernglas und Mantelglas mit zunehmender Fluor-Dotierung, steigt diese Gefahr mit zunehmendem Δn.

Der Erfindung liegt somit die Aufgabe zugrunde, ein POD-Verfahren zur Herstellung einer Vorform anzugeben, die sich durch eine hohe Fluordotierung bei axial möglichst gleichmäßiger Dotierstoffverteilung auszeichnet.

### Allgemeine Beschreibung der Erfindung

Diese Aufgabe wird ausgehend von dem eingangs genannten Verfahren erfindungsgemäß dadurch gelöst, dass auf den Bereich des einen Wendepunktes ein Wärmeelement wärmend einwirkt, wenn sich der Plasmabrenner im Bereich des anderen Wendepunktes befindet.

Um eine Abflachung des axialen Temperaturgradienten beim POD-Abscheideprozess zu erreichen, wird im oben genannten Stand der Technik eine lokale Verminderung der Einwirkung der Plasmaflamme im Bereich der Wendepunkte der Brennerbewegung vorgeschlagen. Die verminderte Einwirkung der Plasmaflamme führt zu einer Verringerung der Temperatur im Bereich des gerade betroffenen Wendepunkts und macht sich im Wesentlichen als Absenkung der Maximaltemperatur des axialen Temperaturgradienten bemerkbar. Die Temperatur am anderen Wendepunkt sowie die Minimaltemperatur des axialen Temperaturgradienten werden dadurch nicht oder kaum beeinflusst.

Die vorliegende Erfindung geht einen anderen Weg. Es wird vorgeschlagen, einem übermäßigen Abkühlen der Vorform im Bereich des einen Wendepunktes der Brennerbewegung entgegenzuwirken, wenn die Plasmaabscheidung im Bereich des anderen Wendepunktes erfolgt, und umgekehrt. Dies geschieht dadurch, dass das jeweils abkühlende Ende der Vorform der temporären oder andauernden Einwirkung einer direkten oder indirekten Beheizung ausgesetzt wird. Eine direkte Beheizung wird durch ein Heizelement erreicht, eine indirekte Beheizung durch Wärmeabgabe eines Wärmespeichers oder durch Reflexion eines Wärmestrahlungsreflektors. Als "Vorform" wird hierbei der Verbund von Substratkörper und Mantelglasschicht bezeichnet, auch wenn die Mantelglasschicht noch nicht vollständig ausgebildet ist.

In jedem Fall wirkt die Beheizung auf das eine Ende der Vorform zumindest dann ein, wenn die Plasmaabscheidung im Bereich des anderen Endes erfolgt, und sie wirkt einem Abkühlen dieses Endes insoweit entgegen als dessen Temperatur höher ist als sie ohne die Einwirkung der Beheizung wäre. Demnach wird beim erfindungsgemäßen Verfahren der axiale Temperaturgradient dadurch verringert, dass dessen Minimaltemperatur angehoben wird (im Vergleich zum Standardverfahren ohne Beheizung der Endbereiche).

Abgesehen von der gewünschten Abflachung des axialen Temperaturgradienten und der damit einhergehenden Annäherung der Temperaturhistorien von Mittel- und Endbereichen der Vorform hat diese Maßnahme aber noch eine weitere wichtige Wirkung:
Die mittlere Temperatur der Vorform wird auf einem höheren Niveau gehalten als dies ohne die Beheizung im Bereich der Brennerbewegungs-Wendepunkte der Fall wäre. Die Vorform hat beim Abscheiden nicht nur im Bereich der Wendepunkte, sondern insgesamt und in jedem lokalen Bereich der Abscheidung eine relativ höhere Temperatur als beim Standard-POD-Prozess ohne den Einsatz des Wärmeelements. Dies verringert den radialen Temperaturgradienten.

Außerdem macht sich folgender Effekt bemerkbar: Die zum Verglasen der Mantelglasschicht erforderliche Wärmemenge wird von der lokal vorhandenen Restwärme der Vorform, insbesondere der Mantelglasschicht und dem zusätzlichen lokalen Wärmeeintrag durch die Plasmaflamme bereitgestellt. Bei höherer Restwärme kann die durch die Plasmaflamme einzutragende Wärmemenge und damit die Temperatur der Plasmaflamme entsprechend geringer sein.

Dieser Zusammenhang wird beim erfindungsgemäßen Verfahren vorteilhaft genutzt. Denn es hat sich überraschend gezeigt, dass nicht oder jedenfalls nicht ausschließlich die Temperatur des Substratkörpers beziehungsweise der bereits erzeugten Mantelglasschicht für den Grad des Fluoreinbaus in das Quarzglas entscheidend ist, sondern (auch oder sogar in erster Linie oder ausschließlich) die Temperatur der Plasmaflamme. Die höhere mittlere Temperatur und Restwärme der Mantelglasschicht im Bereich der Wendepunkte eröffnet unter der Randbedingung des vollständigen Verglasens die Möglichkeit, die Temperatur der Plasmaflamme gegenüber dem Standard-Abscheideprozess zu verringern.

Auf diese Art und Weise kann eine überraschend hohe Fluorkonzentration im Quarzglas der Mantelglasschicht realisiert werden, die zu undotiertem Quarzglas eine Brechzahlabsenkung Δn von mehr als 27 x 10⁻³ vorzugsweise mindestens 30 x 10⁻³ bewirkt. Trotz der damit verbundenen Unterschiede der thermischen Ausdehnungskoeffizienten von Substratkörper und Mantelglasschicht kann wegen des gleichzeitig geringen flachen axialen Temperaturgradienten das Ausfallrisiko wegen Spannungsrissen deutlich verringert werden.

Der überraschend höhere Beladungsgrad mit Fluor dürfte dabei auf die vergleichsweise niedrigere Temperatur der Plasmaflamme zurückzuführen sein und das geringere Ausfallrisiko auf den flacheren axialen und radialen Temperaturgradienten und die Angleichung der thermischen Historie über die Länge der Vorform.

Der zuerst genannte Effekt tritt auch dann auf, wenn die Mantelglasschicht über ihre gesamte Länge zusätzlich erwärmt wird und somit eine höhere "Restwärme" aufweist. Es hat sich aber als günstiger erwiesen, wenn die Einwirkung des Wärmeelements auf die Endbereich der Mantelglasschicht beschränkt und zeitlich in dem Sinne variabel ist, als dass der Grad der Einwirkung des Wärmeelements auf den Bereich des einen Wendepunktes geringer wird, je weiter sich der Plasmabrenner vom anderen Wendepunkt entfernt.

Auf diese Weise wird einem Überhitzen an den Enden der Mantelglasschicht - also im Bereich der Wendepunkte der Brennerbewegung - entgegengewirkt. Denn während sich der Plasmabrenner vom hinteren Wendepunkt weg- und auf den vorderen Wendepunkt zubewegt, wird letzterem durch kontinuierlich oder schrittweise nachlassende Einwirkung des Wärmeelements ein schnelleres Abkühlen ermöglicht. Erreicht der Plasmabrenner schließlich den Bereich des vorderen Wendepunkts, ist dieser durch vorherigen Entzug der Wärmeelement-Einwirkung abgekühlt, so dass sich das doppelte Aufheizen durch die Hin- und Herbewegung des Plasmabrenners - insbesondere bei vergleichsweise kälterer Plasmaflamme - weniger bemerkbar macht als dies bei andauernder Einwirkung des Wärmeelements der Fall wäre. Gleichzeitig wirkt ein anderes Wärmeelement oder dasselbe Wärmeelement auf das andere Ende der Mantelglasschicht ein, indem es dort einem freien Abkühlen entgegenwirkt.

Im Idealfall wirkt dann, wenn sich der Plasmabrenner im Bereich eines Wendepunkts befindet, das Wärmeelement nicht oder weniger auf den Bereich dieses Wendepunktes ein.

Das Wärmeelement ist gegebenenfalls abgeschaltet oder in seiner wärmenden Leistung reduziert oder es befindet sich in einem Abstand vom betreffenden Wendepunkt, so dass es allenfalls aus der Entfernung in geringerem Umfang auf diesen wärmend einwirken kann.

Im Hinblick auf eine möglichst hohe Dotierung mit Fluor bei gleichzeitig homogener axialer und radialer Fluorverteilung hat sich als besonders vorteilhaft erweisen, wenn durch die wärmende Einwirkung des Wärmeelements im Bereich des einen Wendepunktes eine Oberflächentemperatur der Mantelglasschicht von mindestens 650 °C, vorzugsweise mindestens 750 °C aufrechterhalten wird.

Die Einwirkung des Wärmeelements kann von einem Wendepunkt zum anderen Wendepunkt verlagert werden. Vorzugsweise werden jedoch beidseitig zum Plasmabrenner angeordnete Wärmeelemente eingesetzt werden, von denen jedes einem Wendepunkte zugeordnet ist.

Hierbei ist jedem Wendepunkt der Plasmabrenner-Bewegung mindestens ein individuelles Wärmeelement zugeordnet. Diese sind in einem vorgegebenen Abstand vom Plasmabrenner angeordnet und erfahren dieselbe Relativbewegung entlang der Substratkörper-Längsachse wie dieser. Sobald der Plasmabrenner einen Wendepunkt erreicht, befindet sich das diesem Wendepunkt zugeordnete Wärmeelement außerhalb eines effektiven Einwirkungsbereichs, wohingegen sich das andere Wärmeelement beim anderen Wendepunkt (oder in dessen Nähe) befindet und wärmend auf diesen einwirkt.

Das Wärmeelement kann als aktive Heizquelle, wie etwa als Zusatzbrenner oder als elektrische Heizeinrichtung ausgeführt sein. Um einem übermäßigen freien Abkühlen im Bereich der Enden der Mantelglasschicht entgegen zu wirken, genügt es aber, wenn einfache passive Bauteile, wie ein Wärmespeicher oder ein Wärmestrahlungsreflektor, als Wärmeelement eingesetzt werden.

Beim Einsatz passiver Bauteile erschöpft sich die wärmende Einwirkung auf die Mantelglasschicht in der Verminderung des freien Abfließens von Wärme. Eine eigene Versorgung des Wärmeelements mit brennbaren Medien oder mit elektrischer Energie erübrigt sich dabei.

Insbesondere zur Erzeugung und Aufrechterhaltung eines flachen Temperaturgradienten bei sehr langen Mantelglasschichten ist es auch vorteilhaft, wenn der Wärmespeicher beziehungsweise der Wärmestrahlungsreflektor ein passives Bauelement ist, das von einer Heizquelle erhitzt wird.

Die Heizquelle ist vorzugsweise ein Brenner, der auf das Heizelement einwirkt. Dadurch kann nicht nur eine im Vergleich zur passiven Wärmedämmung höhere Temperatur an den Wendepunkten erzeugt und aufrecht erhalten werden, sondern auch eine besser definierte Temperatur, die zufälligen Temperaturschwankungen entgegenwirkt und einen reproduzierbareren Abscheideprozess ermöglicht.

Als passives Wärmeelement wird vorzugsweise ein Quarzglasrohr eingesetzt, das den Substratkörper im Bereich des Wendepunktes umgibt, wenn sich der Plasmabrenner im Bereich des anderen Wendepunktes befindet.

Quarzglas ist thermisch stabil und in Bezug auf die herzustellende Vorform chemisch inert. Rohre beziehungsweise Rohrabschnitte aus Quarzglas können die heißen Enden der Vorform umhüllen und so ohne ergänzende Maßnahmen einen Wärmestau bewirken, der dem freien Abkühlen in den umhüllten Bereichen entgegenwirkt.

Eine Verbesserung seiner wämereflektierenden Wirkung wird erreicht, wenn das Quarzglasrohr eine mindestens teilweise opake Wandung aufweist, die als diffuser Reflektor für Wärmestrahlung wirkt.

Das Quarzglasrohr wirkt als diffuser Reflektor, wenn es aus opakem Quarzglas besteht oder wenn es zumindest eine opake Oberflächenschicht aufweist. Die diffuse Reflexion erzeugt eine wärmende Einwirkung auf den Bereich der Mantelglasschicht, der von dem Quarzglasrohr umhüllt wird.

Das opake Quarzglas zeichnet sich durch hohe chemische und thermische Beständigkeit aus und zeigt im infraroten Wellenlängenbereich (bei einer Messwellenlänge von 1 µm) einen Reflexionsgrad von mehr als 60 % (gemessen in einer Ulbrichtkugel und bezogen auf die Reflektivität des Standardmaterials "Spectralon").

Es hat sich als vorteilhaft erwiesen, wenn sich die Mantelglasschicht mit einer Länge, die maximal 80 % - vorzugsweise weniger als 60 % - ihrer Gesamtlänge entspricht, in das Quarzglasrohr erstreckt.

Hierbei ist beiden Enden der Mantelglasschicht jeweils ein Quarzglasrohr als passives Wärmeelement zugeordnet. Sowohl im Fall eines bewegten Substratkörpers und örtlich fixierter Quarzglasrohre, als auch im Fall eines feststehenden Substratkörpers und während des Abscheideprozesses entlang der Mantelglasschicht beweglicher Quarzglasrohre, überdecken diese zusammen maximal 80% der Gesamtlänge der Mantelglasschicht. Die Länge der Quarzglasrohre und ihr Abstand zueinander sind dabei so gewählt, dass sie jeweils zu keinem Zeitpunkt mehr als 80 %, vorzugsweise weniger als 60 %, der Gesamtlänge der Mantelglasschicht überdecken.

Der von der Plasmaflamme beaufschlagte, besonders heiße Längenabschnitt der Mantelglasschicht ist dabei stets frei von Quarzglasrohren, so dass sich die wärmende Wirkung der Quarzglasrohre auf weniger heiße Bereiche der Mantelglasschicht oder auf deren Endbereiche beschränkt.

Dabei weist das Quarzglasrohr - beziehungsweise weisen die Quarzglasrohre - einen Innendurchmesser auf, der maximal 200 mm, vorzugsweise maximal 120 mm größer ist als der Außendurchmesser des Substratkörpers.

Die Abmessungen sind so gewählt, dass zu Beginn des Abscheideprozesses zwischen Substratkörper und Quarzglasrohr ein Ringspalt von weniger als 100 mm, bevorzugt weniger als 60 mm verbleibt. Gerade bei passiven Wärmeelementen, wie Quarzglasrohren, hängt der Wirkung in Bezug auf Wärmespeicherung oder Wärmestrahlungsreflexion von der Spaltweite zwischen Mantelglasschicht und Quarzglasrohr ab. Im Verlauf des Abscheideprozesses nimmt die Dicke der Mantelglasschicht zu und damit die Ringspaltweite ab. Bei Ringspaltweiten von 100 mm zu Beginn Abscheideprozesses ergibt sich eine geringe wärmende Wirkung auf die Mantelglasschicht im Bereich des Wendepunkts der Brennerbewegung.

Da die Wärmedämmung durch das Quarzglasrohr umso besser gelingt, je schmäler der verbleibende Ringspalt zwischen Quarzglasrohr und Mantelglasschicht ist, hat das Quarzglasrohr vorzugsweise einen Innendurchmesser, der nicht mehr als dem 3-fachen, bevorzugt nicht mehr als dem 2-fachen des maximalen Außendurchmessers der Mantelglasschicht entspricht.

Die Mantelglasschicht erreicht ihren maximalen Außendurchmesser zum Ende des POD-Abscheideprozesses.

Vorzugsweise ist der Substratkörper mit horizontaler orientierter Längsachse angeordnet.

Bei vertikal oder geneigt zur Horizontalen angeordneter Längsachse trägt Wärmekonvektion zwangsläufig beim Abscheideprozess zum axialen Temperaturgradienten bei. Dieser Beitrag wird bei horizontaler Anordnung des Substratkörpers vermieden.

Wie oben erläutert, sind die Enden der Mantelglasschicht bei einer bevorzugten Verfahrensweise von einem Rohr umhüllt beziehungsweise sie werden auf einer erhöhten Temperatur gehalten. Diese Maßnahmen sich aus anderem Stand der Technik grundsätzlich bekannt.

So wird in der EP 1 801 080 A1 ein Plasmasprühverfahren beschrieben, bei dem unter Einsatz eines reversierend bewegten Plasmabrenners vorgefertigte Quarzglaspartikel oder aus natürlichem Rohstoff erzeugte Quarzpartikel auf der Mantelfläche einer Vorform aufgesprüht werden. Um Verunreinigungspartikel von der gerade aufgesprühten, noch weichen Glasschicht fernzuhalten, wird diese von der Umgebung mittels gasgespülten Hüllrohren aus Quarzglas oder Edelstahl abgeschirmt. Im bevorzugten Fall ist nur der unmittelbare Abscheidebereich frei von den Hüllrohren. Um ein übermäßiges Abkühlen der Mantelglasschicht durch das Spülgas zu verhindern, wird dieses auf eine Temperatur zwischen 300 und 600 °C vorgeheizt

Die Hüllrohre decken zwischen dem 0,3- bis 0,8-fachen der Länge der Vorform ab. Bei einem Vorform-Durchmesser von 100 mm haben die Hüllrohre einen Innendurchmesser von 150 mm.

Beim Plasmasprühen wird in der Regel bei einem Sprüh-Durchgang eine dickere Glaslage erzeugt als bei einem Durchgang bei der POD-Abscheidung (mit typischen Lagenstärken um 20 µm). Infolge der größeren Lagenstärken beim Plasmasprühen ist die frisch erzeugte Oberfläche länger weich, was die Gefahr des Einschmelzens von Partikeln aus der Umgebung mit sich bringt. Die EP 1 801 080 A1 löst dieses Problem durch Abschirmung der frischen Oberfläche mittels gasgespülten Hüllrohren. Das Abkühlen der frisch erzeugten Oberfläche durch das Spülgas ist dabei erwünscht und wird ohne weiteres in Kauf genommen (bis zu einer Temperatur bis 300 °C). Die Problematik einer homogenen und hohen Fluordotierung von Quarzglas - wie bei der vorliegenden Erfindung - stellt sich beim Plasmasprühen nicht und sie wäre durch die bekannte Verfahrensweise wegen der eher kühlenden als wärmenden Wirkung der Hüllrohre auch nicht lösbar

Für die Herstellung von Vorformen aus synthetischem Quarzglas sind auch sogenannte "Sootmethoden" bekannt, bei denen durch Flammenhydrolyse oder Oxidation erzeugte SiO2-Partikel auf einem Dorn unter Bildung eines porösen SiO₂-Sootkörpers abgeschieden werden. Der Sootkörper ist mechanisch wenig stabil und neigt zum Reißen. Aus diesem Grund werden die Enden des Sootkörpers häufig zusätzlich verdichtet. Ein derartiges Verfahren ist aus der US 2008/0053155 A1 bekannt. Um das Reißen insbesondere bei großen Sootkörpern zu vermeiden, wird vorgeschlagen, die Enden des SiO₂-Sootkörpers mittels Zusatzheizer permanent zu erwärmen, so dass dort die Temperatur nicht unter 700 °C abfällt. Die Einwirkung des Zusatzheizers ist permanent und wird auch bei einer Sootabscheidung im Endbereich des Sootkörper aufrechterhalten.

Auch bei dieser Verfahrensweise hat die Maßnahme, die Enden des Sootkörpers auf erhöhter Temperatur zu halten, nicht den Zweck einer hohen und homogenen Dotierung mit Fluor. Dass diese Maßnahme irgendeinen Einfluss auf die Fluordotierung bei einem Plasma-Abscheideprozess haben könnte, ergibt sich daraus nicht.

### Ausführungsbeispiel

Nachfolgend wird die Erfindung anhand von Ausführungsbeispielen und einer Patentzeichnung näher erläutert. In schematischer Darstellung zeigt im Einzelnen
- **Figur 1**: eine Vorrichtung zur Herstellung einer Vorform nach dem POD-Verfahren gemäß der Erfindung, und
- **Figur 2**: die Vorrichtung von Figur 1 in einem späteren Verfahrensstadium.

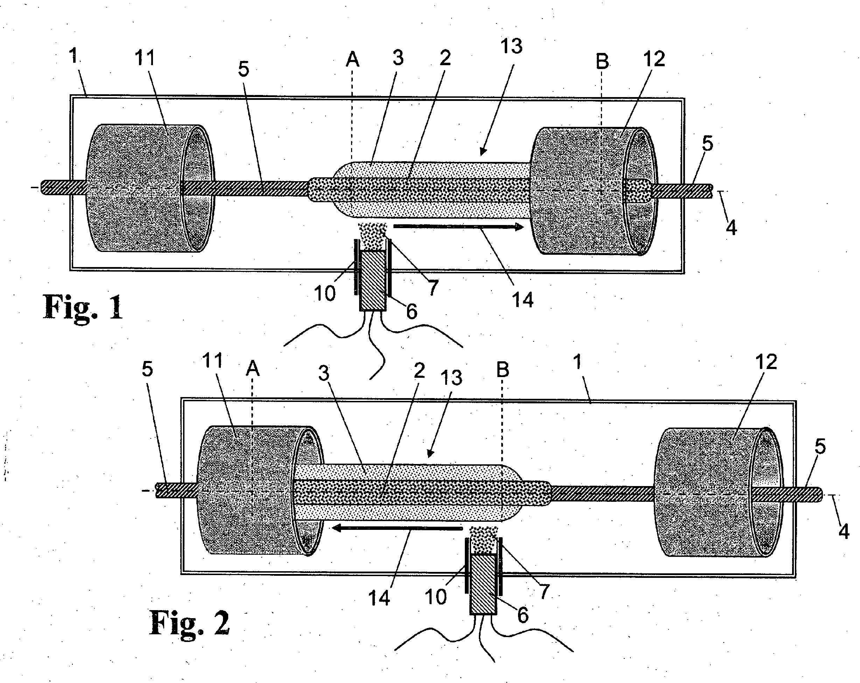

In **Figur 1** ist schematisch das Verfahren zur Herstellung einer Vorform für sogenannte Multimode-Fasern mit stufenförmigem Brechungsindexprofil dargestellt. Dabei wird in einer Abscheidekammer 1 ein Kernstab 2 aus hochreinem, undotiertem synthetischem Quarzglas mit einem Durchmesser von 65 mm und einer Länge von 600 mm mittels eines POD-Verfahrens mit einer Mantelglasschicht 3 aus fluordotiertem Quarzglas beschichtet. Der Kernstab 2 wird mit horizontal orientierter Längsachse 4 mittels stirnseitig angeschweißter Halterohre 5 in den Spannbacken einer (nicht dargestellten) Glasdrehbank gehalten. Mittels der Glasdrehbank ist der Kernstab 2 nicht nur um seine Längsachse 4 rotierbar, sondern auch entlang der Längsachse 4 reversierend hin- und herbwegbar.

Innerhalb der Abscheidekammer 1 und beiderseits des Plasmabrenners 6 sind ein linksseitiges Muffelrohr 11 und ein rechtseitiges Muffelrohr 12 ortsfest angeordnet. Die Muffelrohre 11, 12 sind beidseitig offen und ihre Mittelachsen verlaufen koaxial zur Kernstab-Längsachse 4. Beide Muffelrohre 11, 12 sind identisch ausgebildet; sie bestehen aus opakem Quarzglas; haben einen Innendurchmesser von 170 mm, eine Wandstärke von 20 mm und eine Länge von 500 mm. Bei einer Messwellenlänge von 1 µm hat das opake Quarzglas einen Reflexionsgrad von etwa 65 % (bezogen auf den Werkstoff "Spectralon")Der Mittenabstand der Muffelrohre 11; 12 zueinander beträgt 760 mm.

Dem Plasmabrenner 6 werden als Ausgangssubstanzen SiCl₄, Sauerstoff und SF₆ zugeführt und diese in einer dem Plasmabrenner 6 zugeordneten Brennerflamme 7 zu SiO₂-Partikeln umgesetzt. Die Plasmaflamme 7 wird innerhalb eines Brennerrohres 10 aus Quarzglas erzeugt, das von einer Hochfrequenzspule umgeben ist. Zu Beginn des Abscheideprozesses wird zwischen dem Brennerrohr 10 und dem Kernstab 2 ein Abstand von 80 mm eingestellt.

Nachfolgend wird das erfindungsgemäße Verfahren zur Herstellung einer Vorform anhand der in Figuren 1 und 2 gezeigten Vorrichtung beispielhaft erläutert.

Der um seine Längsachse 4 rotierende Kernstab 2 wird mit einer Translationsgeschwindigkeit von 500 mm/min entlang des Plasmabrenners 6 reversierend hin- und herbewegt. Dabei werden SiO₂-Partikel schichtweise auf der Zylindermantelfläche des Kernstabs 2 abgeschieden. Jede abgeschiedene Schichtlage wird mittels der Plasmaflamme 7 direkt zu dem fluorhaltigen Quarzglas verglast. Als Vorform 13 ist dabei der Verbund aus Kernstab 2 und Mantelglasschicht 3 bezeichnet, auch wenn diese noch nicht vollständig ausgebildet ist. Die Enden der Mantelglasschicht 3 entsprechen denjenigen der Vorform 13.

Die Umkehr der Kernstabbewegung erfolgt jeweils dann, wenn eine der Wendepunkt-Positionen A, B der Vorform 13 den Plasmabrenner 6 erreicht hat. Die Wendepunkte A, B sind somit der Vorform 13 fest zugeordnet und bewegen sich mit dieser entlang der Längsachse 4. Der Abstand der Wendepunkte A und B voneinander entspricht etwa der nutzbaren Länge der Vorform 13 (ohne konische Endkappen der Mantelglasschicht 3) und beträgt 600 mm. Der Außendurchmesser der Vorform nach Abschlüss des Abscheideprozesses beträgt 80 mm.

Während des Abscheideprozesses überstreicht die Plasmaflamme 7 den Kernstab 2 beziehungsweise die bereits erzeugte Mantelglasschicht 3 vom Wendepunkt A zum Wendepunkt B und zurück und bewirkt dabei eine lokale Temperaturerhöhung. Der sich über die Länge der Vorform 13 bildende axiale Temperaturgradient ist maximal, wenn sich die Plasmaflamme 7 im Bereich eines der Wendepunkte A, B befindet. Das gegenüberliegende Ende der Vorform 13 kühlt dabei ab, hat aber noch eine hohe Restwärme.

Die beiderseits des Plasmabrenners 6 angeordneten Muffelrohre 11, 12 dienen einerseits dazu, diese axialen Temperaturgradienten abzuflachen und andererseits dazu, die mittlere Temperatur der Vorform 13 zu erhöhen. Letzteres ermöglicht eine Reduzierung der Temperatur der Plasmaflamme 7.

Die Muffelrohre 11, 12 sind nicht zusätzlich beheizt. In einer alternativen Verfahrensweise werden die Muffelrohre mittels auf sie gerichteter Knallgasbrenner auf einer Temperatur um 1000 °C gehalten.

Beim in **Figur 1** gezeigten Verfahrensstadium nähert sich die Plasmaflamme 7 dem Ende der Vorform 13, dem der Wendepunkt A zugeordnet ist. Der Richtungspfeil 14 zeigt die weitere Bewegungsrichtung der Vorform 13 bis zum Erreichen von Wendepunkt A an. Das gegenüberliegende Vorform-Ende ragt dabei bereits ein Stück in das rechtsseitige Muffelrohr 12 hinein. Bei Erreichen des Wendepunktes A ragt die Vorform 13 über eine Länge von 400 mm in das Muffelrohr 12 hinein; danach dreht sich die Bewegungsrichtung um.

**Figur 2** zeigt das Verfahrensstadium, in dem die Plasmaabscheidung im Bereich des anderen Wendepunkt B erfolgt. Der Richtungspfeil 14 zeigt hier die weitere Bewegungsrichtung der Vorform 13 bis zum Erreichen dieses Wendepunkts B. Das gegenüberliegende Vorform-Ende ragt dabei bereits in das linksseitige Muffelrohr 11 hinein, wobei auch auf dieser Seite die maximale Eindringtiefe 400 mm beträgt, und zwar sobald die Plasmaflamme 7 den Wendepunkt B erreicht. Die Muffelrohre 11; 12 sind soweit voneinander entfernt, dass dann, wenn sich die Vorform 13 mit einem Ende innerhalb eines der Muffelrohre 11; 12 befindet, das andere vollständig außerhalb des anderen Muffelrohres 11; 12 liegt.

Die Muffelrohre 11; 12 halten die Restwärme der jeweiligen Vorform-Enden indem sie als Wärmestrahlungsreflektor und als Wärmespeicher wirken. Auf diese Weise wird das jeweils gerade nicht von der Plasmaflamme 7 beheizte und daher verstärkt abkühlende Ende der Vorform 13 temporär der Einwirkung einer indirekten Beheizung (durch Wärmeabgabe oder Wärmereflexion) ausgesetzt und so einem raschen Abkühlen des betreffenden Vorform-Endes entgegengewirkt und ein vergleichsweise flacherer axialer Temperaturgradient eingestellt. Die Temperatur an den Wendepunkten A, B sinkt zu keinem Zeitpunkt unter 750 °C ab.

Außerdem wird die mittlere Temperatur der Vorform 13 während des Abscheideprozesses insgesamt, also über ihre gesamte Länge gesehen, auf einem höheren Niveau gehalten als dies ohne die Muffelrohre 11; 12 der Fall wäre. Die Vorform 13 hat demnach eine relativ höhere Temperatur, so dass der Wärmebeitrag zur Verglasung der Mantelglasschicht 3, der von der Plasmaflamme 7 zu liefern ist, geringer ausfallen kann.

Dies äußert sich darin, dass beim oben erläuterten Ausführungsbeispiel der Erfindung eine um 10 % geringere Leistung des Plasmabrenners 6 zum Verglasen erforderlich ist als bei Standard-Abscheideprozess ohne Einsatz der Muffelrohre 11; 12.

Dadurch ergibt sich eine überraschend hohe Fluor-Dotierung des Quarzglases der Mantelglasschicht 3, die geeignet ist, gegenüber dem undotierten Quarzglas des Kernstabs 2 eine Brechzahlabsenkung Δn von 30 x 10⁻³ zu bewirken. Trotz dieses hohen Δn-Wertes konnte die Ausfallrate wegen Reißens der Vorform um fast 100 % reduziert werden.

Die nach dem erfindungsgemäßen Verfahren erhaltene Vorform besteht aus einem Kern aus reinem Quarzglas, das einen Brechungsindex bei 633 nm von 1,4571 aufweist, und aus einem Mantel aus fluordotiertem Quarzglas, das bei einer Wellenlänge von 633 nm einen Brechungsindex von 1,4271 aufweist. Der mittlere Fluorgehalt des Mantelglases liegt bei etwa 7 Gew.-%. Der Gehalt an Hydroxylgruppen im Kern liegt bei 0,1 Gew.-ppm.

## Patentansprüche

1. Plasma-Abscheideprozess zur Herstellung einer optischen Vorform (13) mit einer Mantelglasschicht (3) aus fluordotiertem Quarzglas, indem mittels eines Plasmabrenners (6) SiO₂-Partikel in Gegenwart von Fluor gebildet und auf der Zylindermantelfläche eines um seine Längsachse (4) rotierenden, zylinderförmigen Substratkörpers (2) aus Quarzglas schichtweise abgeschieden und zu der Mantelglasschicht (3) verglast werden, wobei Plasmabrenner (6) und Substratkörper (2) relativ zueinander bewegt werden, derart, dass sich der Plasmabrenner (6) reversierend zwischen zwei Wendepunkten (A; B) entlang des Substratkörpers bewegt, **dadurch gekennzeichnet, dass** auf den Bereich des einen Wendepunktes (A; B) ein Wärmeelement (11; 12) wärmend einwirkt, wenn sich der Plasmabrenner (6) im Bereich des anderen Wendepunktes (B; A) befindet.

2. Abscheideprozess nach Anspruch 1, **dadurch gekennzeichnet, dass** der Grad der Einwirkung des Wärmeelements (11; 12) auf den Bereich des einen Wendepunktes (A; B) geringer wird, je weiter sich der Plasmabrenner (6) vom anderen Wendepunkt (B; A) entfernt.

3. Abscheideprozess nach Anspruch 2, **dadurch gekennzeichnet, dass** dann, wenn sich der Plasmabrenner (6) im Bereich eines Wendepunkts (A; B) befindet, das Wärmeelement (11; 12) nicht oder weniger auf den Bereich dieses Wendepunktes (A; B) einwirkt.

4. Abscheideprozess nach einem der vorhergehenden Ansprüche, **dadurch gekennzeichnet, dass** durch die wärmende Einwirkung des Wärmeelements (11; 12) im Bereich des einen Wendepunktes eine Oberflächentemperatur der Mantelglasschicht von mindestens 650 °C, vorzugsweise mindestens 750 °C aufrechterhalten wird.

5. Abscheideprozess nach einem der vorhergehenden Ansprüche, **dadurch gekennzeichnet, dass** beidseitig zum Plasmabrenner (6) angeordnete Wärmeelemente (11; 12) eingesetzt werden, von denen jedes einem Wendepunkt (A; B) zugeordnet ist.

6. Abscheideprozess nach einem der vorhergehenden Ansprüche, **dadurch gekennzeichnet, dass** ein Wärmespeicher oder ein Wärmestrahlungsreflektor als Wärmeelement (11; 12) eingesetzt wird.

7. Abscheideprozess nach Anspruch 6, **dadurch gekennzeichnet, dass** der Wärmespeicher beziehungsweise der Wärmestrahlungsreflektor ein passives Bauelement ist, das von einer Heizquelle erhitzt wird.

8. Abscheideprozess nach Anspruch 5 oder 6, **dadurch gekennzeichnet, dass** als Wärmespeicher oder als Wärmestrahlungsreflektor ein Quarzglasrohr (11; 12) eingesetzt wird, das den Substratkörper (2) im Bereich des Wendepunktes (A; B) umgibt, wenn sich der Plasmabrenner (6) im Bereich des anderen Wendepunkts (B; A) befindet.

9. Abscheideprozess nach Anspruch 8, **dadurch gekennzeichnet, dass** das Quarzglasrohr (11; 12) eine mindestens teilweise opake Wandung aufweist, die als diffuser Reflektor für Wärmestrahlung wirkt.

10. Abscheideprozess nach einem der Ansprüche 8 oder 9, **dadurch gekennzeichnet, dass** sich die Mantelglasschicht mit einer Länge, die maximal 80 % - vorzugsweise weniger als 60 % - ihrer Gesamtlänge entspricht, in das Quarzglasrohr erstreckt.

11. Abscheideprozess nach einem der Ansprüche 8 bis 10, **dadurch gekennzeichnet, dass** der Innendurchmesser des Quarzglasrohres maximal 200 mm, vorzugsweise maximal 120 mm größer ist als der Außendurchmesser des Substratkörpers.

12. Abscheideprozess nach einem der Ansprüche 8 bis 11, **dadurch gekennzeichnet, dass** das Quarzglasrohr einen Innendurchmesser hat, der nicht mehr als dem 3-fachen, bevorzugt nicht mehr als dem 2-fachen des maximalen Außendurchmessers der Mantelglasschicht entspricht.

13. Abscheideprozess nach einem der vorhergehenden Ansprüche, **dadurch gekennzeichnet, dass** der Substratkörper (2) mit horizontaler orientierter Längsachse (4) angeordnet wird.

14. Abscheideprozess nach einem der vorhergehenden Ansprüche, **dadurch gekennzeichnet, dass** im Quarzglas der Mantelglasschicht (3) ein Fluorgehalt eingestellt wird, der gegenüber undotiertem Quarzglas eine Brechzahlabsenkung Δn von mindestens 27 x 10⁻³, vorzugsweise von mindestens 30 x 10⁻³ bewirkt.

## Claims

1. A plasma deposition process for producing an optical preform (13) having a cladding glass layer (3) of fluorine-doped quartz glass, said method comprising forming SiO₂ particles by means of a plasma torch (6) in the presence of fluorine, and deposition said SiO₂- particles layer by layer on outer surface of a cylindrical substrate body (2) of quartz glass rotating about a longitudinal axis (4) thereof, and vitrifying said SiO₂- particles so as to form the cladding glass layer (3), whereby the plasma torch (6) and the substrate body (2) being moved relative to each other such that the plasma torch (6) reversingly moves between two turning points (A; B) along the substrate body, **characterized in that** a thermal element (11; 12) thermally acts on the area of the one turning point (A; B) when the plasma torch (6) is positioned in an area of the other turning point (B; A).

2. The deposition process according to claim 1, **characterized in that** the thermal element (11; 12) acts less on the area of the one turning point (A; B) is smaller the farther away the plasma torch (6) is from the other turning point (B; A).

3. The deposition process according to claim 2, **characterized in that** whenever the plasma torch (6) is positioned in the area of a turning point (A; B), the thermal element (11; 12) does not act or acts less on the area of said turning point (A; B).

4. The deposition process according to any one of the preceding claims, **characterized in that** due to the thermal action of the thermal element (11; 12) in the area of the one turning point a surface temperature of the cladding glass layer of at least 650°C, preferably at least 750°C, is maintained.

5. The deposition process according to any one of the preceding claims, **characterized in that** thermal elements (11 ;12) are used that are arranged at both sides relative to the plasma torch (6), and of which each is assigned to a turning point (A; B).

6. The deposition process according to any one of the preceding claims, **characterized in that** the thermal element (11; 12) comprises a thermal store or a thermal radiation reflector.

7. The deposition process according to claim 6, **characterized in that** the thermal store or the thermal radiation reflector is a passive element that is heated by a heat source.

8. The deposition process according to claim 5 or 6, **characterized in that** the thermal store or thermal radiation reflector comprises a quartz glass tube (11; 12), said quartz glass tube surrounding the substrate body (2) in the area of the turning point (A; B) when the plasma torch (6) is positioned in the area of the other turning point (B; A).

9. The deposition process according to claim 8, **characterized in that** the quartz glass tube (11; 12) comprises at least one partly opaque wall that acts as a diffusing reflector for thermal radiation.

10. The deposition process according to any one of claims 8 or 9, **characterized in that** the cladding glass layer extends into the quartz glass tube a length that is not more than 80%, preferably less than 60%, of a total length the cladding glass layer.

11. The deposition process according to any one of claims 8 to 10, **characterized in that** the inner diameter of the quartz glass tube is not more than 200 mm, preferably not more than 120 mm, greater than the outer diameter of the substrate body.

12. The deposition process according to any one of claims 8 to 11, **characterized in that** the quartz glass tube has an inner diameter which is not more than 3 times, preferably not more than 2 times, the maximum outer diameter of the cladding glass layer.

13. The deposition process according to any one of the preceding claims, **characterized in that** the longitudinal axis (4) of the substrate body (2) is arranged horizontally.

14. The deposition process according to any one of the preceding claims, **characterized in that** a fluorine content that in comparison with undoped quartz glass effects a refractive index reduction Δn of at least 27 x 10⁻³, preferably of at least 30 x 10⁻³, is set in the quartz glass of the cladding glass layer (3).

## Revendications

1. Procédé de dépôt par plasma pour la fabrication d'une préforme optique (12) avec une couche de verre enveloppante (3) en verre de quartz dopé au fluor, dans le fait qu'au moyen d'un chalumeau à plasma (6), des particules de SiO2 sont formées en présence de fluor et sont déposées par couche sur la surface enveloppante cylindrique d'un corps de substrat (2) en verre de quartz cylindrique tournant autour de son axe longitudinal (4) et sont vitrifiées en couche de verre d'enveloppe (3), le chalumeau à plasma (6) et le corps de substrat (2) étant déplacés l'un par rapport à l'autre, de sorte que le chalumeau à plasma (6) se déplace de manière réversible entre deux points d'inflexion (A; B) le long du corps de substrat, **caractérisé en ce qu'**un élément chauffant (11; 12) agit sur la zone d'un point d'inflexion (A; B) quand le chalumeau à plasma (6) se trouve dans la zone de l'autre point d'inflexion (B; A).

2. Procédé de dépôt selon la revendication 1, **caractérisé en ce que** le degré de l'action de l'élément chauffant (11; 12) est plus faible sur la zone d'un des points d'inflexion (A; B) plus le chalumeau à plasma s'éloigne de l'autre point d'inflexion (B; A).

3. Procédé de dépôt selon la revendication 2, **caractérisé en ce que**, quand le chalumeau à plasma (6) agit dans la zone d'un point d'inflexion (A; B), l'élément chauffant (11; 12) agit pas ou moins sur la zone de ce point d'inflexion (A; B).

4. Procédé de dépôt selon l'une des revendications précédentes, **caractérisé en ce que** par l'action chauffante de l'élément chauffant (11; 12) dans la zone d'un point d'inflexion, une température de surface de la couche de verre enveloppante est maintenue à au moins 650°C de préférence 750°C.

5. Procédé de dépôt selon l'une des revendications précédentes, **caractérisé en ce que** des éléments chauffants (11; 12) sont disposés des deux côtés du chalumeau à plasma (6) dont chacun est associé à un point d'inflexion (A; B).

6. Procédé de dépôt selon l'une des revendications précédentes, **caractérisé en ce qu'**un accumulateur de chaleur ou un réflecteur de rayonnement de chaleur est utilisé en tant qu'élément chauffant (11; 12).

7. Procédé de dépôt selon la revendication 6, **caractérisé en ce que** l'accumulateur de chaleur respectivement le réflecteur de rayonnement de chaleur est un élément passif qui est chauffé par une source de chaleur.

8. Procédé de dépôt selon la revendication 5 ou 6, **caractérisé en ce qu'**en tant qu'accumulateur de chaleur ou réflecteur de rayonnement de chaleur, on utilise un tube de verre de quartz (11; 12), qui entoure le corps de substrat (2) dans la zone du point d'inflexion (A; B), quand le chalumeau à plasma (6) se trouve dans la zone de l'autre point d'inflexion (B; A).

9. Procédé de dépôt selon la revendication 8, **caractérisé en ce que** le tube de verre de quartz (11; 12) présente une paroi au moins partiellement opaque qui agit comme réflecteur diffus pour le rayonnement de chaleur.

10. Procédé de dépôt selon l'une des revendications 8 ou 9, **caractérisé en ce que** la couche de verre d'enveloppe s'étend dans le tube de verre de quartz avec une longueur qui correspond au maximum à 80% de préférence à moins de 60 % - de sa longueur totale.

11. Procédé de dépôt selon l'une des revendications 8 à 10, **caractérisé en ce que** le diamètre interne du tube de verre de quartz est au maximum de 200 mm, de préférence au maximum de 120 mm plus grand que le diamètre externe du corps de substrat.

12. Procédé de dépôt selon l'une des revendications 8 à 11, **caractérisé en ce que** le diamètre de verre de quartz a un diamètre interne qui correspond à pas plus de 3 fois de préférence à pas plus de 2 fois le diamètre maximal externe de la couche de verre d'enveloppe.

13. Procédé de dépôt selon l'une des revendications précédentes, **caractérisé en ce que** le corps de substrat (2) est disposé avec l'axe longitudinal (4) orienté horizontalement.

14. Procédé de dépôt selon l'une des revendications précédentes, **caractérisé en ce que** dans le verre de quartz de la couche de verre d'enveloppe (3), il est prévu une teneur en fluor qui par rapport à un verre de quartz non dopé provoque une réduction de l'indice de réfraction Δn d'au moins 27 x 10⁻³, de préférence d'au moins 30 x 10⁻³.
